# EUROPÄISCHE PATENTSCHRIFT

(11) **EP 3 686 567 B1**
(45) Veröffentlichungstag und Bekanntmachung des Hinweises auf die Patenterteilung: **06.09.2023**
(21) Anmeldenummer: 19153596.2
(22) Anmeldetag: 24.01.2019
(51) Int. Cl.: G01F 23/284, H01P 3/16

(54) **METALLISIERTER DIELEKTRISCHER WELLENLEITER**
METALLIZED DIELECTRIC WAVEGUIDE
GUIDE D'ONDES DIÉLECTRIQUE MÉTALLISÉ

(43) Veröffentlichungstag der Anmeldung: 29.07.2020
(73) Patentinhaber: VEGA Grieshaber KG, 77709 Wolfach (DE)
(72) Erfinder: KIENZLE, Klaus, 77736 Zell am Harmersbach (DE); WÄLDE, Steffen, 78078 Niedereschach (DE)
(74) Vertreter: Maiwald GmbH

(56) Entgegenhaltungen:
- EP-A1- 1 863 122
- EP-A1- 2 631 611
- CA-A1- 2 449 596
- US-A1- 2014 285 277
- US-A1- 2018 097 268
- US-B2- 8 390 402
- Dmitry S Filonov ET AL: "Metalized polymer tubes for high-frequency electromagnetic waveguiding All-dielectric metasurfaces View project Optical Forces in Photonics and Plasmonics View project", , 9. November 2018 (2018-11-09), Seiten 1-4, XP055602537, Gefunden im Internet: URL:https://www.researchgate.net/publicati on/328900116 [gefunden am 2019-07-04]
- C. BAER ET AL: "Dielectric waveguides for industrial radar applications", INTERNATIONAL JOURNAL OF MICROWAVE AND WIRELESS TECHNOLOGIES, Bd. 7, Nr. 3-4, 24. Februar 2015 (2015-02-24), Seiten 399-406, XP055602548, Cambridge ISSN: 1759-0787, DOI: 10.1017/S1759078715000136

## Beschreibung

### Gebiet der Erfindung

Die Erfindung betrifft eine dielektrische Leiteranordnung, ein Verfahren zur Herstellung einer dielektrischen Leiteranordnung, ein Füllstandradar und eine Verwendung.

### Hintergrund

Zur Füllstandmessung oder zur Grenzstandbestimmung, beispielsweise in einem Behälter, wird beispielsweise ein Füllstandradar eingesetzt, um einen bestimmten Pegel eines Füllguts, z.B. in dem Behälter, anzuzeigen. Dazu werden Radarwellen eingesetzt, die in einer Hochfrequenzeinheit erzeugt und von einer Antenneneinheit abgestrahlt werden. Mit zunehmender Frequenz wird es allerdings immer schwieriger, die Radarwellen mit Hilfe eines Koaxialkabels zu übertragen. Deshalb werden die Radarwellen und/oder Mikrowellen höherer Frequenzen in vielen Fällen mit Hilfe von starren metallischen Hohlleitern, die mit einem Gas - z.B. Luft - gefüllt sind, übertragen. Die mangelnde mechanische Flexibilität dieser Hohlleiter kann jedoch die Konstruktion und/oder den Aufbau von Füllstandradaren einschränken.

Die EP 1 863 122 A1 beschreibt ein Füllstandradar mit einer konischen Hornantenne.

Das Dokument US 2018/097268 A1 beschreibt zumindest einen dielektrischen Wellenleiter mit einer Beschichtung ohne Spalt.

### Zusammenfassung der Erfindung

Es ist eine Aufgabe der Erfindung, eine Leiteranordnung zur Übertragung von Radarwellen zur Verfügung zu stellen, die eine mechanische Flexibilität aufweist.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der Erfindung betrifft eine dielektrische Leiteranordnung zur Übertragung von Mikrowellen. Die dielektrische Leiteranordnung weist einen dielektrischen Leiterkern aus einem Feststoff auf. Weiterhin weist die dielektrische Leiteranordnung eine Beschichtung auf, die zumindest abschnittsweise den gesamten Umfang des Leiterkerns spaltfrei umgibt und die aus einer dünnen leitfähigen Schicht besteht.

Die Mikrowellen umfassen mindestens einen Frequenzbereich der Radarwellen. Die Mikrowellen umfassen einen Frequenzbereich von 1 bis 300 GHz, beispielsweise von über 60 GHz, z.B. von über 200 GHz. Ein dielektrischer Leiterkern weist eine Dielektrizitätszahl εᵣ, von größer 1,5, insbesondere von größer 3, auf. Der dielektrische Leiterkern ist ein Feststoff. Der Feststoff ist so gewählt, dass dadurch eine nur geringe Dämpfung der Mikrowellen stattfindet. Der Feststoff kann beispielsweise einen Kunststoff, Glasfaser oder Keramik aufweisen oder aus einem Kunststoff, Glasfaser oder Keramik bestehen. Der Feststoff ist flexibel ausgeführt. Dabei kann der Feststoff dazu eingerichtet sein, einen Biegeradius von als 20 cm, insbesondere von weniger als 4 cm, aufzuweisen. Der Feststoff kann so ausgeführt sein, dass er für einen Temperaturbereich bis 250°C zugelassen ist. Manche Feststoffe, beispielsweise Keramikfaser, können bis 450°C zugelassen sein.

Die Beschichtung der dielektrischen Leiteranordnung besteht aus einer dünnen leitfähigen Schicht. Diese Schicht umgibt den gesamten Umfang des Leiterkerns spaltfrei, und zwar zumindest abschnittsweise. Die dünne leitfähige Schicht trägt weiterhin zu einer Verbesserung der Wellenfortpflanzung in der dielektrischen Leiteranordnung bei. Darüber hinaus führt die leitfähige Schicht zu einer Verbesserung der Störfestigkeit. Dadurch werden einerseits die Immissionen von Störquellen in den Leiterkern reduziert, und andrerseits wird die Abstrahlung der Mikrowellen aus dem Leiterkern deutlich reduziert.

Dabei können beispielsweise Anschlussstellen der dielektrischen Leiteranordnung keine oder keine vollständige leitfähige Schicht aufweisen. Die Anschlussstellen können z.B. an einer Fügestelle angeordnet sein, bei der zwei Leitungsabschnitte zusammengefügt werden. Anschlussstellen können z.B. auch am Beginn und/oder am Ende der Leiteranordnung angeordnet sein, wo die Mikrowellen beispielsweise ein- und/oder ausgekoppelt werden. Für die Ein- und/oder Auskopplung der Mikrowellen können beispielsweise Techniken verwendet werden, die im Stand der Technik bekannt sind.

Die Kombination der genannten Merkmale kann die Übertragung von Mikrowellen und die Handhabung einer Leiteranordnung zur Übertragung von Mikrowellen erheblich verbessern und/oder vereinfachen. Insbesondere kann dadurch die Herstellung von Messgeräten zur Füllstandmessung oder zur Grenzstandbestimmung, beispielsweise ein Füllstandradar, vereinfacht werden. Insbesondere durch die Flexibilität der Leiteranordnung kann deren Handhabung vereinfacht werden. Dies kann zu einer Reduzierung der Kosten für die Herstellung und/oder die Wartung der Leiteranordnung bzw. von Geräten, welche diese Leiteranordnung umfassen, beitragen. Durch die Flexibilität kann die Leiteranordnung auch biegbar und bis zu einem gewissen Maße sogar aufwickelbar gestaltet sein.

In einer Ausführungsform ist die Leiteranordnung dazu eingerichtet, einen Biegeradius von weniger als 20 cm, insbesondere von weniger als 4 cm, aufzuweisen. Dadurch wird die Flexibilität der Leiteranordnung weiter gesteigert.

In einer Ausführungsform ist der dielektrische Leiterkern im Wesentlichen zylindrisch. Diese Gestaltung kann weiterhin zu einer geringen Dämpfung der Mikrowellen beitragen.

In einer weiteren Ausführungsform kann der dielektrische Leiterkern elliptisch oder rechteckig ausgeführt sein.

In einer Ausführungsform weist der dielektrische Leiterkern Polytetrafluorethylen, PTFE, Polyetheretherketon, PEEK, Polypropylen, PP, Polyethylen, PE, Keramik und/oder eine temperaturbeständige Glasfaser auf, oder der Leiterkern besteht aus zumindest einem dieser Materialien. Diese Materialien können vorteilhafterweise eine gute Verfügbarkeit der Materialien und gute Übertragungseigenschaften verbinden. Zumindest einige dieser Materialien können darüber hinaus kostengünstiger sein als z.B. starre metallische Hohlleiter.

In einer Ausführungsform weist die Beschichtung eine Leitfähigkeit von größer als 30 · 10⁶ S/m, beispielsweise von größer als 50 · 10⁶ S/m, auf. Eine derartige hohe Leitfähigkeit kann zu einer weiteren Reduzierung von Immissionen, die von Störquellen stammen, in den Leiterkern beitragen. Andrerseits kann dadurch die Abstrahlung der Mikrowellen aus dem Leiterkern deutlich reduziert werden.

In einer Ausführungsform weist die Beschichtung Metall, insbesondere Kupfer, Silber, Gold, Palladium, Legierungen aus diesen Metallen, leitfähige Stoffe, insbesondere metallisierte Kunststoffe, Graphen, ein duktiles leitfähiges Material und/oder eine Kombination der genannten Materialien auf. Dabei kann die Auswahl der Materialien für die Beschichtung durch Materialeigenschaften wie Sprödigkeit, Auftragbarkeit und/oder Kosten bestimmt werden.

In einer Ausführungsform weist die Beschichtung eine Dicke zwischen 20 µm und 200 µm, insbesondere zwischen 50 µm und 100 µm, auf. Dies hat sich als guter Kompromiss zwischen guter Abschirmung, einfacher Handhabung und guter Kostenstruktur erwiesen.

In einer Ausführungsform weist die Beschichtung leitfähigen Lack, beispielsweise Silberleitlack, auf. Dabei ist der leitfähige Lack mittels Streichens, Sprühens, Tauchens und/oder anderen Methoden aufgetragen. Dies hat sich in Experimenten als vorteilhaft für die oben genannten Zwecke erwiesen. Ein Vorteil dieser Methode ist, dass der Bereich zwischen Wellenleiter und Metallisierung herstellungsbedingt immer spaltfrei ist; dadurch werden die Mikrowellen im Hohlleiter optimal geführt.

In einer Ausführungsform ist die Beschichtung mittels eines Verfahrens der Dünnschichttechnik auf den dielektrischen Leiterkern aufgetragen.

In einer Ausführungsform ist die Beschichtung mittels physikalischer Gasphasenabscheidung, insbesondere mittels Sputterdeposition oder thermischen Verdampfens, mittels chemischer Gasphasenabscheidung, insbesondere mittels plasmaunterstützter chemischer Gasphasenabscheidung, mittels thermischen Spritzens, und/oder mittels Galvanisieren, insbesondere mittels Kunststoffgalvanisieren, auf den dielektrischen Leiterkern aufgetragen. Die genannten Verfahren verbinden vorteilhafterweise eine präzise Beschichtung mit einer guten Handhabbarkeit. Ein Vorteil der genannten Methoden ist, dass der Bereich zwischen Wellenleiter und Metallisierung herstellungsbedingt immer spaltfrei ist; dadurch werden die Mikrowellen im Hohlleiter optimal geführt.

In einer Ausführungsform kann der dielektrische Wellenleiter zuerst in Form gebracht werden und hinterher beschichtet und/oder metallisiert werden. Dies kann zum Beispiel vorteilhaft sein, wenn ein Hohlleiter relativ eng, zum Beispiel spiralförmig, aufgewickelt werden soll.

In einer Ausführungsform ist der Durchmesser des dielektrischen Leiterkerns so gewählt, dass in einem vordefinierten Frequenzbereich nur der Grundmode der Mikrowellen ausbreitungsfähig ist. Dabei kann der vordefinierte Frequenzbereich von weiteren Spezifikationen des Systems, in das die Leiteranordnung eingebaut wird, abhängig sein. Der Grundmode der Mikrowellen wird im Rund-Hohlleiter auch TE₁₁-Mode oder H₁₁-Mode genannt. Im Rechteck-Hohlleiter hat der Grundmode die Bezeichnung TE₁₀ bzw. H₁₀. Durch diese Ausführungsform können sich geringere Signalverfälschungen ergeben, die z.B. durch (störende) Dispersion des Signals verursacht werden. Diese Ausführungsform kann insbesondere zur Signalübertragung über weitere Strecken vorteilhaft eingesetzt werden.

In einer Ausführungsform ist die Beschichtung weiterhin mit einem Material zur Stoßabsorption beschichtet und/oder umhüllt. Dies kann insbesondere dann vorteilhaft sein, wenn die Leiteranordnung außerhalb eines schützenden Gehäuses verwendet wird.

Ein weiterer Aspekt der Erfindung betrifft ein Füllstandradar. Das Füllstandradar weist eine Hochfrequenzeinheit auf, die zum Erzeugen eines Mikrowellensignals eingerichtet ist. Außerdem weist es eine Antenneneinheit auf, die zum Abstrahlen des Mikrowellensignals eingerichtet ist. Ferner weist das Füllstandradar eine dielektrische Leiteranordnung wie oben und/oder nachfolgend beschrieben auf, die zum Übertragen des von der Hochfrequenzeinheit erzeugten Mikrowellensignals an die Antenneneinheit eingerichtet ist.

Dabei kann die dielektrische Leiteranordnung beispielsweise zum Überbrücken einer Distanz zwischen Hochfrequenzeinheit und Antenneneinheit eingesetzt werden. Dies kann beispielsweise vorteilhaft sein, um eine vordefinierte Laufzeit zwischen den beiden Einheiten zu erreichen oder beispielsweise zur Temperaturentkopplung der beiden Einheiten.

Erfindungsgemäß ist die dielektrische Leiteranordnung mehrteilig ausgeführt. Dabei kann die Verbindung der Abschnitte der dielektrischen Leiteranordnung z.B. exakt plan geschnitten sein oder auch in einem exakt gleichen Winkel geschnitten werden und von einer metallischen oder metallisierten Hülse umgeben werden. Dabei kann der Innendurchmesser der Hülse exakt auf den Außendurchmesser des metallisierten Wellenleiter angepasst sein. Dadurch kann eine spaltfreie Mikrowellenverbindung entstanden sein, welche sich durch die Passung der Teile selbst hält. Die Verbindung kann lösbar oder unlösbar gestaltet sein.

Erfindungsgemäß ist die dielektrische Leiteranordnung zumindest abschnittsweise spiralförmig angeordnet. Dies ist möglich wegen der Flexibilität der Leiteranordnung. Dies kann zu einer Reduzierung der Kosten für die Herstellung und/oder die Wartung der Leiteranordnung bzw. von Geräten, welche diese Leiteranordnung umfassen, beitragen.

Ein weiterer Aspekt der Erfindung betrifft ein Verfahren zur Herstellung einer dielektrischen Leiteranordnung wie oben und/oder nachfolgend beschrieben. Das Verfahren weist folgende Schritte auf:
- Bereitstellen eines dielektrischen Leiterkerns;
- Aufbringen, zumindest abschnittsweise, einer Beschichtung, welche den gesamten Umfang des Leiterkerns spaltfrei umgibt und aus einer dünnen leitfähigen Schicht besteht.

Dabei kann der dielektrische Leiterkern vor und/oder nach dem Aufbringen der Beschichtung in Form gebracht werden. Das Aufbringen vor dem Aufbringen der Beschichtung kann zum Beispiel vorteilhaft sein, wenn in Hohlleiter relativ eng, zum Beispiel spiralförmig, aufgewickelt werden soll.

Erfindungsgemäß ist die Leiteranordnung mehrteilig ausgestaltet. Dabei weist das Verfahren zur Herstellung einer mehrteiligen dielektrischen Leiteranordnung folgende weitere Schritte auf:
- Schneiden eines Endes eines ersten dielektrischen Leiterkerns und eines Endes eines zweiten dielektrischen Leiterkerns in einem vordefinierten Winkel, wobei das Ende des ersten dielektrischen Leiterkerns und das Ende des zweiten dielektrischen Leiterkerns denselben Winkel aufweisen;
- Aneinanderfügen des Endes des ersten dielektrischen Leiterkerns und des Endes des zweiten dielektrischen Leiterkerns in einem Z-Winkel;
- Umhüllen des Endebereichs des ersten dielektrischen Leiterkerns und des Endebereichs des zweiten dielektrischen Leiterkerns mittels einer metallischen oder metallisierten Hülse. Der vordefinierte Winkel kann 90° betragen oder ein spitzer Winkel sein, insbesondere ein Winkel zwischen 30° und 60°, beispielsweise zwischen 40° und 50°. Die Enden des ersten und des zweiten dielektrischen Leiterkerns sind dabei nach Möglichkeit exakt plan geschnitten. Die Enden werden dann bis auf Kontakt bzw. Anschlag aneinandergefügt. Das kann vor und/oder nach dem Umhüllen der Endebereiche mittels der metallischen oder metallisierten Hülse geschehen. Dadurch kann eine im Wesentlichen spaltfreie Mikrowellenverbindung geschaffen werden, welche sich durch die Passung der Teile selbst hält. Zusätzlich kann die Verbindung noch form-, kraft- und/oder stoffschlüssig verbunden sein, z.B. geklebt oder und/oder mit einem Schrumpfschlauch oder anderweitig fixiert sein.

In einer Ausführungsform ist die Verbindung zwischen dem ersten dielektrischen Leiterkern und dem zweiten dielektrischen Leiterkern lösbar gestaltet. Dadurch wird die Umkonfiguration der Leiteranordnung vereinfacht, beispielsweise bei einer Reparatur und/oder Wartung.

Ein weiterer Aspekt der Erfindung betrifft eine Verwendung einer dielektrischen Leiteranordnung wie oben und/oder nachfolgend beschrieben zur Übertragung von Mikrowellen in einem Frequenzbereich von etwa 80 GHz bis etwa 300 GHz, insbesondere von etwa 240 GHz

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Es zeigt:
- **Fig. 1**: eine schematische Skizze eines Füllstandmessgeräts gemäß einer Ausführungsform;
- **Fig. 2**: eine schematische Skizze eines Füllstandmessgeräts gemäß einer weiteren Ausführungsform;
- **Fig. 3a**: eine schematische Skizze einer Verbindung zweier Leiteranordnungen gemäß einer Ausführungsform;
- **Fig. 3b**: eine schematische Skizze einer Verbindung zweier Leiteranordnungen gemäß einer weiteren Ausführungsform;
- **Fig. 4**: ein Verfahren gemäß einer Ausführungsform.

### Detaillierte Beschreibung von Ausführungsformen

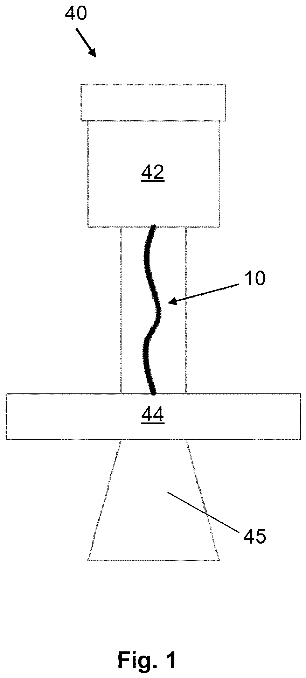

**Fig. 1** zeigt eine schematische Skizze eines Füllstandmessgeräts oder Füllstandradars 40 gemäß einer Ausführungsform. Dabei weist das Füllstandradar 40 eine Hochfrequenzeinheit 42 auf, die zum Erzeugen eines Mikrowellensignals eingerichtet ist. Außerdem weist es eine Antenneneinheit 44 auf, die zum Abstrahlen des Mikrowellensignals eingerichtet ist. Die Antenneneinheit 44 kann beispielsweise mittels eines Flansches an den Behälter mit dem zu messenden Füllgut angeordnet sein. Die Hochfrequenzeinheit 42 und die Antenneneinheit 44 sind mittels einer dielektrischen Leiteranordnung 10 verbunden, welche zum Übertragen des von der Hochfrequenzeinheit 42 erzeugten Mikrowellensignals an die Antenneneinheit 44 eingerichtet ist. Das Abstrahlen des Mikrowellensignals erfolgt beispielsweise mittels der Antenneneinheit 44, an welche zur besseren Bündelung ein Antennenhorn 45 angebracht sein kann. Im Bereich der Antenneneinheit 44 können hohe Temperaturen, z.B. bis 250°C, oder sogar bis 450°C, anliegen. Daher kann die Leiteranordnung 10 zur thermischen Entkopplung von Antenneneinheit 44 und Hochfrequenzeinheit 42 beitragen. Weiterhin ist die Leiteranordnung 10 temperaturbeständig gegen diese hohen Temperaturen ausgeführt.

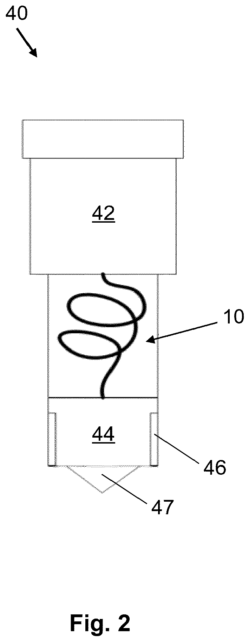

**Fig. 2** zeigt eine schematische Skizze eines Füllstandmessgeräts 40 gemäß einer weiteren Ausführungsform. Dabei weist das Füllstandradar 40 eine Hochfrequenzeinheit 42 auf, die zum Erzeugen eines Mikrowellensignals eingerichtet ist. Außerdem weist es eine Antenneneinheit 44 auf, die zum Abstrahlen des Mikrowellensignals eingerichtet ist. Die Antenneneinheit 44 kann in dieser Ausführungsform ein Einschraubgewinde 46 aufweisen. Die Hochfrequenzeinheit 42 und die Antenneneinheit 44 sind mittels einer dielektrischen Leiteranordnung 10 verbunden, welche zum Übertragen des von der Hochfrequenzeinheit 42 erzeugten Mikrowellensignals an die Antenneneinheit 44 eingerichtet ist. Die Leiteranordnung 10 ist - beispielsweise um eine vordefinierte Laufzeit zwischen der Hochfrequenzeinheit 42 und der Antenneneinheit 44 zu erreichen oder beispielsweise zur Temperaturentkopplung - spiralförmig ausgeführt. Diese Ausgestaltung ist insbesondere durch die Flexibilität der Leiteranordnung 10 möglich.

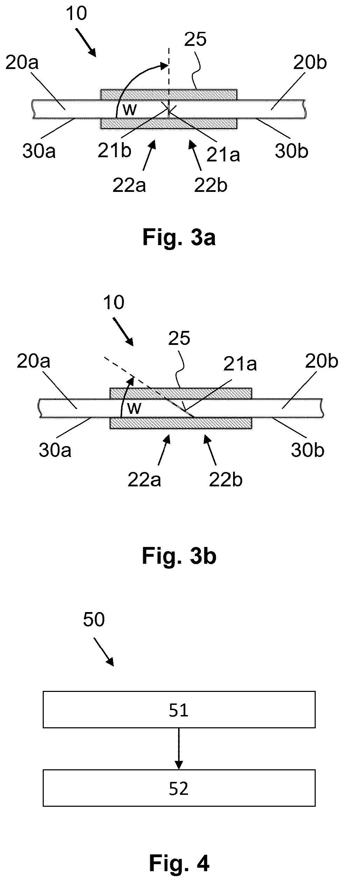

**Fig. 3a** zeigt eine schematische Skizze einer Verbindung zweier Leiteranordnungen 10 gemäß einer Ausführungsform. Dabei wird ein Ende 21a eines ersten dielektrischen Leiterkerns 20a und ein Ende 21b eines zweiten dielektrischen Leiterkerns 20b in einem vordefinierten Winkel w abgeschnitten. Dabei weisen das Ende 21a des ersten dielektrischen Leiterkerns 20a und das Ende 21b des zweiten dielektrischen Leiterkerns 20b denselben Winkel w auf, in dem gezeigten Ausführungsbeispiel 90°. Endebereiche 22a und 22b der Leiterkerne 20a und 20b sind mit einer metallischen oder metallisierten Hülse 25 umhüllt. Die Endebereiche 22a und 22b können, zumindest abschnittsweise, eine Beschichtung 30a und 30b aufweisen. Die Hülse 25 kann mit zumindest einem der Leiterkerne 20a und 20b bzw. mit der Beschichtung 30a und 30b form-, kraft- und/oder stoffschlüssig verbunden, z.B. geklebt oder und/oder mit einem Schrumpfschlauch oder anderweitig fixiert, sein. Die Verbindung kann lösbar oder unlösbar gestaltet sein.

**Fig. 3b** zeigt eine schematische Skizze einer Verbindung zweier Leiteranordnungen 10 gemäß einer weiteren Ausführungsform. Die **Fig. 3b** unterscheidet sich von **Fig. 3a** durch den Winkel w, der bei **Fig. 3b** ein spitzer Winkel ist. Die Leiterkerne 20a und 20b weisen denselben Winkel w auf.

**Fig. 4** zeigt ein Flussdiagramm 50 Verfahren gemäß einer Ausführungsform. In einem Schritt 51 wird ein dielektrischer Leiterkern 20 (siehe obige Figuren) wie in der obigen Beschreibung spezifiziert bereitgestellt. In einem Schritt 52 wird zumindest abschnittsweise, eine Beschichtung 30 aufgebracht. Die Beschichtung 30 umgibt den gesamten Umfang des Leiterkerns 20 spaltfrei und besteht aus einer dünnen leitfähigen Schicht. Dabei kann der dielektrische Leiterkern vor und/oder nach dem Aufbringen der Beschichtung in Form, z.B. in eine spiralförmige Form, gebracht werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 10: dielektrische Leiteranordnung
- 20, 20a, 20b: dielektrischer Leiterkern
- 21a, 21b: Ende
- 22a, 22b: Endebereich
- 25: Hülse
- 30, 30a, 30b: Beschichtung
- 40: Füllstandmessgeräts, Füllstandradar
- 42: Hochfrequenzeinheit
- 44: Antennensystem
- 45: Antennenhorn
- 46: Einschraubgewinde
- 47: kegelförmiger Bereich
- 50: Flussdiagramm
- 51, 52: Schritte

## Patentansprüche

1. Dielektrische Leiteranordnung (10) zur Übertragung von Mikrowellen, aufweisend:
- einen dielektrischen, Leiterkern (20) aus einem Feststoff; und
- eine Beschichtung (30), die zumindest abschnittsweise den gesamten Umfang des Leiterkerns (20) spaltfrei umgibt und die aus einer dünnen leitfähigen Schicht besteht, **dadurch gekennzeichnet,**
**dass** der dielektrische Leiterkern (20) der dielektrischen Leiteranordnung (10) mehrteilig ausgeführt ist,
und/oder
**dass** die dielektrische Leiteranordnung (10) zumindest abschnittsweise spiralförmig angeordnet ist.

2. Dielektrische Leiteranordnung (10) nach Anspruch 1,
wobei die Leiteranordnung (10) dazu eingerichtet ist, einen Biegeradius von weniger als 20 cm, insbesondere von weniger als 4 cm, aufzuweisen.

3. Dielektrische Leiteranordnung (10) nach Anspruch 1 oder 2,
wobei der dielektrische Leiterkern (20) Polytetrafluorethylen, PTFE, Polyetheretherketon, PEEK, Polypropylen, PP, Polyethylen, PE, Keramik und/oder eine temperaturbeständige Glasfaser aufweist oder aus zumindest einem dieser Materialien besteht.

4. Dielektrische Leiteranordnung (10) nach einem der vorhergehenden Ansprüche,
wobei die Beschichtung (30) eine Leitfähigkeit von größer als 30 · 10⁶ S/m, beispielsweise von größer als 50 · 10⁶ S/m, aufweist.

5. Dielektrische Leiteranordnung (10) nach Anspruch 4,
wobei die Beschichtung (30) Metall, insbesondere Kupfer, Silber, Gold, Palladium, Legierungen aus diesen Metallen, leitfähige Stoffe, insbesondere metallisierte Kunststoffe, Graphen, ein duktiles leitfähiges Material und/oder eine Kombination der genannten Materialien aufweist.

6. Dielektrische Leiteranordnung (10) nach Anspruch 4,
wobei die Beschichtung (30) eine Dicke zwischen 20 µm und 200 µm, insbesondere zwischen 50 µm und 100 µm, aufweist.

7. Dielektrische Leiteranordnung (10) nach einem der vorhergehenden Ansprüche,
wobei der Durchmesser des dielektrischen Leiterkerns (20) so gewählt ist, dass in einem vordefinierten Frequenzbereich nur der Grundmode der Mikrowellen ausbreitungsfähig ist.

8. Dielektrische Leiteranordnung (10) nach einem der vorhergehenden Ansprüche,
wobei die Beschichtung (30) weiterhin mit einem Material zur Stoßabsorption beschichtet und/oder umhüllt ist.

9. Füllstandradar (40), aufweisend:
eine Hochfrequenzeinheit (42), eingerichtet zum Erzeugen eines Mikrowellensignals,
eine Antenneneinheit (44), eingerichtet zum Abstrahlen des Mikrowellensignals, und
eine dielektrische Leiteranordnung (10) nach einem der vorhergehenden Ansprüche, eingerichtet zum Übertragen des von der Hochfrequenzeinheit (42) erzeugten Mikrowellensignals an die Antenneneinheit (44).

10. Verfahren zur Herstellung einer mehrteiligen dielektrischen Leiteranordnung (10) nach
einem der Ansprüche 1 bis 8, mit den Schritten:
- Bereitstellen eines dielektrischen Leiterkerns (20);
- Aufbringen, zumindest abschnittsweise, einer Beschichtung (30), welche den gesamten Umfang des Leiterkerns (20) spaltfrei umgibt und aus einer dünnen leitfähigen Schicht besteht;
- Schneiden eines Endes (21a) eines ersten dielektrischen Leiterkerns (20a) und eines Endes (21b) eines zweiten dielektrischen Leiterkerns (20b) in einem vordefinierten Winkel (w), wobei das Ende (21a) des ersten dielektrischen Leiterkerns (20a) und das Ende (21b) des zweiten dielektrischen Leiterkerns (20b) denselben Winkel (w) aufweisen;
- Aneinanderfügen des Endes (21a) des ersten dielektrischen Leiterkerns (20a) und des Endes (21b) des zweiten dielektrischen Leiterkerns (20b) in einem Z-Winkel (w); und
- Umhüllen des Endebereichs (22a) des ersten dielektrischen Leiterkerns (20a) und des Endebereichs (22b) des zweiten dielektrischen Leiterkerns (20b) mittels einer metallischen oder metallisierten Hülse (25).

11. Verfahren nach Anspruch 10,
wobei die Verbindung zwischen dem ersten dielektrischen Leiterkern (20a) und dem zweiten dielektrischen Leiterkern (20b) lösbar gestaltet ist.

12. Verwendung einer dielektrischen Leiteranordnung (10) nach einem der Ansprüche 1 bis 8 zur Übertragung von Mikrowellen in einem Frequenzbereich von etwa 80 GHz bis etwa 300 GHz, insbesondere von etwa 240 GHz.

## Claims

1. A dielectric conductor assembly (10) for transmitting microwaves, comprising:
- a dielectric conductor core (20) of a solid material; and
- a coating (30), which at least in sections surrounds the entire periphery of the conductor core (20) without gaps and which consists of a thin conductive layer,
**characterized in that** the dielectric conductor core (20) of the dielectric conductor arrangement (10) is made in multiple parts, and/or
**in that** the dielectric conductor arrangement (10) is arranged spirally at least in sections.

2. The dielectric conductor arrangement (10) according to claim 1,
wherein the conductor arrangement (10) is configured to have a bending radius of less than 20 cm, in particular of less than 4 cm.

3. The dielectric conductor arrangement (10) according to claim 1 or 2,
wherein the dielectric conductor core (20) comprises polytetrafluoroethylene, PTFE, polyetheretherketone, PEEK, polypropylene, PP, polyethylene, PE, ceramic and/or a temperature-resistant glass fiber or consists of at least one of these materials.

4. The dielectric conductor assembly (10) according to any one of the preceding claims,
wherein the coating (30) has a conductivity greater than 30 · 10⁶ S/m, for example greater than 50 · 10⁶ S/m.

5. The dielectric conductor assembly (10) according to claim 4,
wherein the coating (30) comprises metal, in particular copper, silver, gold, palladium, alloys of these metals, conductive materials, in particular metallized plastics, graphene, a ductile conductive material and/or a combination of said materials.

6. The dielectric conductor arrangement (10) according to claim 4,
wherein the coating (30) has a thickness between 20 µm and 200 µm, in particular between 50 µm and 100 µm.

7. The dielectric conductor arrangement (10) according to any one of the preceding claims,
wherein the diameter of the dielectric conductor core (20) is selected such that in a predefined frequency range only the fundamental mode of the microwaves is capable of propagation.

8. The dielectric conductor assembly (10) according to any one of the preceding claims,
wherein the coating (30) is further coated and/or encased with a material for shock absorption.

9. A fill level radar (40), comprising:
a radio frequency unit (42), configured for generating a microwave signal,
an antenna unit (44) configured for radiating the microwave signal, and
a dielectric conductor assembly (10) according to any one of the preceding claims, configured for transmitting the microwave signal generated by the radio frequency unit (42) to the antenna unit (44).

10. A method of manufacturing a multi-part dielectric conductor assembly (10) according to any one of claims 1 to 8, comprising the steps of:
- providing a dielectric conductor core (20);
- applying, at least in sections, a coating (30) surrounding the entire periphery of the conductor core (20) without a gap and consisting of a thin conductive layer;
- cutting an end (21a) of a first dielectric conductor core (20a) and an end (21b) of a second dielectric conductor core (20b) at a predefined angle (w), the end (21a) of the first dielectric conductor core (20a) and the end (21b) of the second dielectric conductor core (20b) having the same angle (w);
- joining the end (21a) of the first dielectric conductor core (20a) and the end (21b) of the second dielectric conductor core (20b) at a Z angle (w); and
- encasing the end portion (22a) of the first dielectric conductor core (20a) and the end portion (22b) of the second dielectric conductor core (20b) by means of a metallic or metallized sleeve (25).

11. The method according to claim 10,
wherein the connection between the first dielectric conductor core (20a) and the second dielectric conductor core (20b) is designed to be detachable.

12. Use of a dielectric conductor arrangement (10) according to any one of claims 1 to 8 for transmitting microwaves in a frequency range from about 80 GHz to about 300 GHz, in particular at about 240 GHz.

## Revendications

1. Agencement de conducteur diélectrique (10) pour la transmission hyperfréquence, comportant :
- une âme conductrice diélectrique (20) constituée d'une matière solide ; et
- un revêtement (30) entourant au moins par sections la circonférence complète de l'âme conductrice (20), sans espace, et constitué d'une couche conductrice mince, **caractérisé en ce que**
l'âme conductrice diélectrique (20) de l'agencement de conducteur diélectrique (10) est réalisée en plusieurs parties, et/ou
l'agencement conducteur diélectrique (10) est agencé au moins par sections en spirale.

2. Agencement de conducteur diélectrique (10) selon la revendication 1,
dans lequel l'agencement de conducteur (10) est conçu pour avoir un rayon de courbure inférieur à 20 cm, en particulier inférieur à 4 cm.

3. Agencement de conducteur diélectrique (10) selon la revendication 1 ou 2,
dans lequel l'âme conductrice diélectrique (20) comporte du polytétrafluoréthylène, PTFE, de la polyétheréthercétone, PEEK, du polypropylène, PP, du polyéthylène, PE, une céramique et/ou une fibre de verre résistante à la température ou est constituée d'au moins un de ces matériaux.

4. Agencement de conducteur diélectrique (10) selon l'une des revendications précédentes,
dans lequel le revêtement (30) a une conductivité supérieure à 30·10⁶ S/m, par exemple supérieure à 50·10⁶ S/m.

5. Agencement de conducteur diélectrique (10) selon la revendication 4,
dans lequel le revêtement (30) comporte un métal, en particulier du cuivre, de l'argent, de l'or, du palladium, des alliages de ces métaux, des substances conductrices, en particulier des matières plastiques métallisées, du graphène, un matériau conducteur ductile et/ou une combinaison des matériaux cités.

6. Agencement de conducteur diélectrique (10) selon la revendication 4,
dans lequel le revêtement (30) a une épaisseur comprise entre 20 um et 200 um, en particulier entre 50 µm et 100 µm.

7. Agencement de conducteur diélectrique (10) selon l'une des revendications précédentes,
dans lequel le diamètre de l'âme conductrice diélectrique (20) est choisi de telle sorte que dans une plage de fréquences prédéfinie, seul le mode fondamental des hyperfréquences peut se propager.

8. Agencement de conducteur diélectrique (10) selon l'une des revendications précédentes,
dans lequel le revêtement (30) est en outre revêtu et/ou enveloppé d'un matériau pour l'absorption des chocs.

9. Radar de niveau de remplissage (40), comportant :
une unité à haute fréquence (42) configurée pour générer un signal hyperfréquence,
une unité d'antenne (44) configurée pour émettre le signal hyperfréquence, et
un agencement de conducteur diélectrique (10) selon l'une des revendications précédentes, conçu pour transmettre à l'unité d'antenne (44) le signal hyperfréquence généré par l'unité à haute fréquence (42).

10. Procédé de fabrication d'un agencement de conducteur diélectrique en plusieurs parties selon l'une des revendications 1 à 8, comportant les étapes consistant à :
- fournir une âme conductrice diélectrique (20) ;
- appliquer, au moins par sections, un revêtement (30) entourant la circonférence complète de l'âme conductrice (20), sans espace, et constitué d'une couche conductrice mince ;
- couper une extrémité (21a) d'une première âme conductrice diélectrique (20a) et une extrémité (21b) d'une seconde âme conductrice diélectrique (20b) à un angle prédéfini (w), dans lequel l'extrémité (21a) de la première âme conductrice diélectrique (20a) et l'extrémité (21b) de la seconde âme conductrice diélectrique (20b) ont le même angle (w) ;
- assembler l'extrémité (21a) de la première âme conductrice diélectrique (20a) et l'extrémité (21b) de la seconde âme conductrice diélectrique (20b) à un angle Z (w) ; et
- envelopper la zone d'extrémité (22a) de la première âme conductrice diélectrique (20a) et la zone d'extrémité (22b) de la seconde âme conductrice diélectrique (20b) au moyen d'une douille métallique ou métallisée (25).

11. Procédé selon la revendication 10,
dans lequel la liaison entre la première âme conductrice diélectrique (20a) et la seconde âme conductrice diélectrique (20b) est formée de manière détachable.

12. Utilisation d'un agencement de conducteur diélectrique (10) selon l'une des revendications 1 à 8 pour la transmission hyperfréquence dans une plage de fréquences d'environ 80 GHz à environ 300 GHz, en particulier d'environ 240 GHz.
